# EUROPÄISCHE PATENTSCHRIFT

(11) **EP 2 382 116 B1**
(45) Veröffentlichungstag und Bekanntmachung des Hinweises auf die Patenterteilung: **27.03.2013**
(21) Anmeldenummer: 09748100.6
(22) Anmeldetag: 30.10.2009
(51) Int. Cl.: B60S 1/16, H02K 5/12, H02K 7/116, H02K 5/10, H02K 5/15

(54) **SCHEIBENWISCHVORRICHTUNG, INSBESONDERE FÜR EIN KRAFTFAHRZEUG**
WINDSHIELD WIPER UNIT, PARTICULARLY FOR A MOTOR VEHICLE
DISPOSITIF D'ESSUIE-GLACE, NOTAMMENT POUR UN VEHICULE A MOTEUR

(30) Priorität: 29.12.2008 DE 102008055160
(43) Veröffentlichungstag der Anmeldung: 02.11.2011
(73) Patentinhaber: Robert Bosch GmbH, 70442 Stuttgart (DE)
(72) Erfinder: SINGLER, Thomas, 77790 Steinach (DE); WEIGOLD, Thomas, 96052 Bamberg (DE); HUESGES, Mario, 77830 Buehlertal (DE); HOLZER, Thomas, 74889 Sinsheim-Waldangelloch (DE); LAUK, Detlef, 77871 Renchen (DE); SAUM, Andreas, 77815 Buehl (DE)
(86) Internationale Anmeldenummer: PCT/EP2009/064371
(87) Internationale Veröffentlichungsnummer: WO 2010/076058

(56) Entgegenhaltungen:
- EP-A- 0 075 777
- DE-A1- 10 319 189
- DE-A1- 19 844 601
- DE-A1-102004 051 547
- DE-U1- 7 901 984

## Beschreibung

### Stand der Technik

Die Erfindung betrifft eine Scheibenwischvorrichtung nach der Gattung des unabhängigen Anspruchs.

Aus der DE-A-19820798 ist schon eine Scheibenwischvorrichtung für Kraftfahrzeuge bekannt, die ein erstes Gehäuse und ein Getriebe mit einem zweiten Gehäuse aufweist, wobei das erste Gehäuse mit dem zweiten Gehäuse in einem Rollierbereich durch Aufrollieren befestigt ist.

Hierbei ist problematisch, dass Bauteiltoleranzen des zweiten Gehäuses, insbesondere wenn dieses in einem Gussverfahren hergestellt ist, zu einer unzureichenden Befestigung führen. So können dadurch beispielsweise Form-Versätze auftreten oder Grate zu Undichtigkeiten führen.

DE-A 19844601 offenbart den Oberbegriff des Anspruchs 1.

### Offenbarung der Erfindung

### Vorteile der Erfindung

Die erfindungsgemäße Scheibenwischvorrichtung mit den Merkmalen des Hauptanspruchs hat den Vorteil, dass zwischen dem ersten und dem zweiten Gehäuse im Rollierbereich ein Dichtmittel vorgesehen ist. Vorteilhafterweise wird auf diese Weise nicht nur die Dichtheit der Scheibenwischvorrichtung erhöht, sondern auch eine verbesserte Verbindung zwischen den beiden Gehäusen verursacht, sodass eine höhere Tolerierung der Maße ermöglicht ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Dichtmittel als Folie ausgebildet ist. Insbesondere Kunststofffolien, vorzugsweise aus PTFE, TPE oder NBR sind kostengünstig und einfach in der Montage hand zu haben.

Ist das Dichtmittel als im Querschnitt kreisförmiger Ring, insbesondere aus Kunststoff ausgebildet, so kann dieser in der Fertigung einfach auf das zweite Gehäuse aufgesetzt werden. Darüber hinaus sind derartige Ringe kostengünstig.

Besonders vorteilhaft ist es, wenn das zweite Gehäuse eine Rolliernut im Rollierbereich aufweist und das erste Gehäuse im Wesentlichen aus Blech ausgebildet ist. Vorteilhafterweise kann ein Dichtmittel in die Rolliernut in einfacher Weise eingebracht werden, sodass die Montage weiter vereinfacht wird.

Weiterhin ist es vorteilhaft, wenn das Dichtmittel als ringförmiges Flachband ausgebildet ist. Beispielsweise kann ein derartiges Flachband in den Rollierbereich eingelegt werden und weist einen großen Toleranzausgleichsbereich auf.

Besonders vorteilhaft ist es, wenn das Dichtmittel als Ring ausgebildet ist, der in der Rolliernut des zweiten Gehäuses angeordnet ist. Auf diese Weise wird ein Verrutschen des Dichtmittels während des Rolliervorgangs vermieden.

Weiterhin ist es von Vorteil, wenn das Dichtmittel leicht viskos und kompressibel ist und in eine Rolliernut des zweiten Gehäuses eingebracht ist. Auf diese Weise wird die Dichtigkeit des Gehäuses noch weiter erhöht.

### Beschreibung der Zeichnungen

Ausführungsbeispiele der Erfindung sind in den Zeichnungen dargestellt und in der nachfolgenden Beschreibung näher erläutert. Es zeigen:
- Figur 1: eine erfindungsgemäße Scheibenwischvorrichtung in einer schematischen Darstellung,
- Figur 2: den Rollierbereich einer Scheibenwischvorrichtung im Querschnitt,
- Figur 3: einen Rollierbereich einer Scheibenwischvorrichtung in einer Variation und
- Figur 4: einen Querschnitt durch einen Rollierbereich einer erfindungsgemäßen Scheibenwischvorrichtung.

### Beschreibung der Ausführungsbeispiele

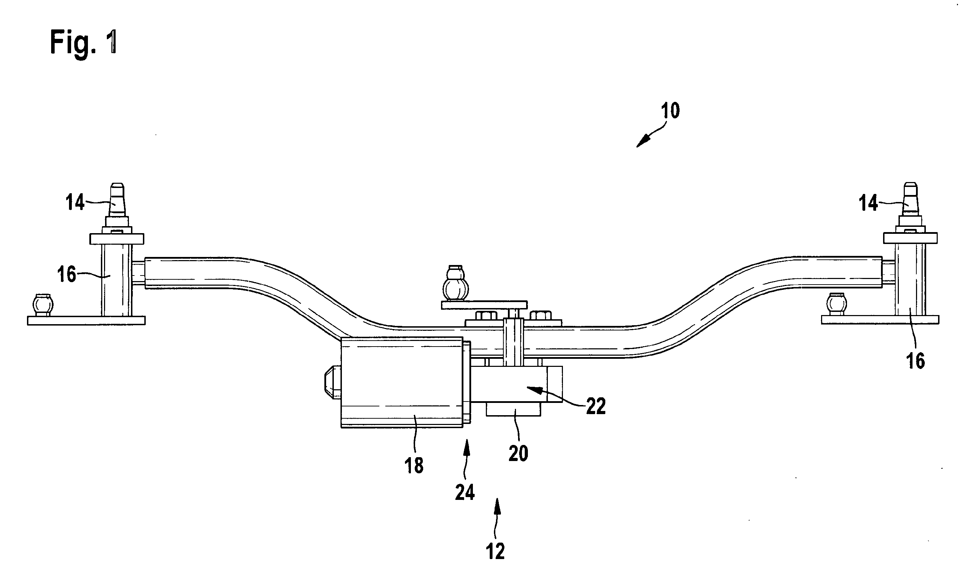

In Figur 1 ist eine erfindungsgemäße Scheibenwischvorrichtung 10 in einer schematischen Darstellung gezeigt. Diese umfasst ein Antriebsmittel 12, das über - aus Übersichtlichkeitsgründen nicht gezeichnete - Schubstangen zwei Wischerwellen 14, die in Wischerlagern 16 gelagert sind, antreibt, sodass diese eine pendelnde Bewegung vollführen.

Das Antriebsmittel 12 umfasst ein erstes Gehäuse 18, in dem ein Elektromotor angeordnet ist sowie ein zweites Gehäuse 20, in dem ein Getriebe 22 angeordnet ist.

In einem Rollierbereich 24 ist das erste Gehäuse 18 am zweiten Gehäuse 20 durch Aufrollieren befestigt.

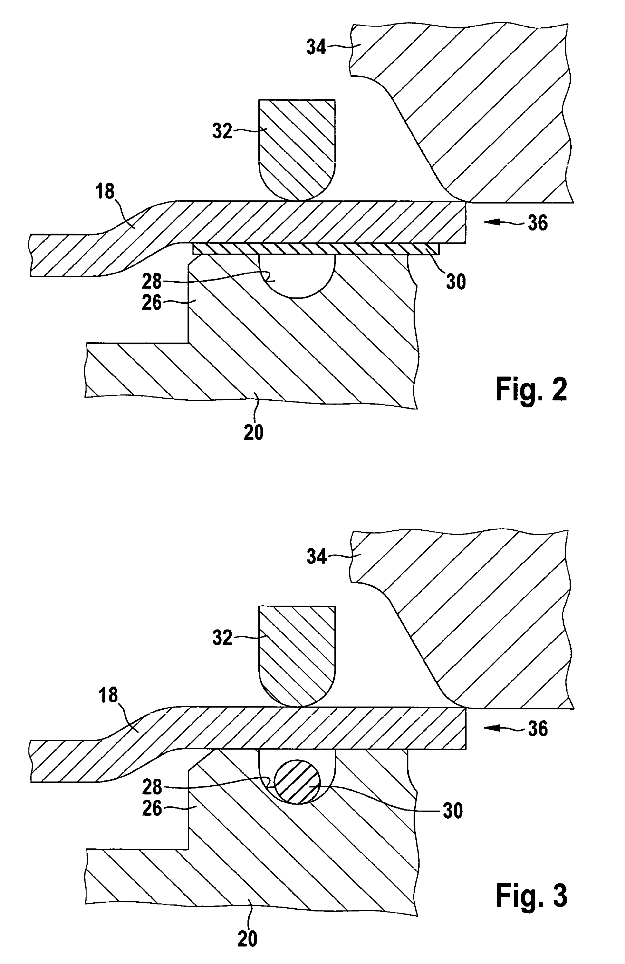

In Figur 2 ist der Rollierbereich 24 der Scheibenwischvorrichtung während des Rollierens in einer schematischen Querschnittsdarstellung gezeigt. Das zweite Gehäuse 20 weist einen Rollierring 26 auf, der einstückig mit dem zweiten Gehäuse 20 ausgebildet ist. Im Rollierring 26 ist eine Rolliernut 28 angeordnet, die im Querschnitt insbesondere halbkreisförmig konkav ist. Das erste Gehäuse 18 ist aus Blech ausgebildet und liegt auf dem Rollierring 26 auf. Zwischen dem ersten Gehäuse 18 und dem zweiten Gehäuse 20 ist ein Dichtmittel 30 angeordnet, welches aus einer PTFE-Folie besteht, die eine Dicke von 0,5 mm aufweist und über die gesamte Breite des Rollierrings 26 parallel zum ersten Gehäuse 18 verläuft.

Beim Aufrollieren wird eine erste Rollierscheibe 32 auf der der Rolliernut 28 abgewandten Seite des ersten Gehäuses 18 aufgesetzt und in Richtung der Rolliernut 28 gepresst. Dabei dreht sich das erste Gehäuse 18 und das zweite Gehäuse 20 mit dem Dichtmittel 30. Ebenso wird eine Crimpscheibe 34 im Bereich eines dem zweiten Gehäuse 20 zugewandten Endes 36 des ersten Gehäuses 18 in Richtung des zweiten Gehäuses 20 gedrückt, sodass sich das Ende 36 des ersten Gehäuses 18 um den Rollierring 26 des zweiten Gehäuses 20 herumschmiegt.

In Figur 3 ist eine andere Variation der Scheibenwischvorrichtung 10 gezeigt. Im Gegensatz zum flachen, folienartigen Dichtmittel 30 aus dem vorherigen Ausführungsbeispiel (Figur 2) ist hier ein im Querschnitt kreisrundes Dichtmittel 30 in die Rolliernut 28 des Rollierrings 26 eingebracht. Auch dieses Dichtmittel 30 kann aus PTFE, TPE oder NBR ausgebildet sein.

Beim Aufrollieren dreht sich wiederum das erste Gehäuse 18 und das zweite Gehäuse 20. Die Rollierscheibe 32 und die Crimpscheibe 34 werden in der Zeichnung nach unten, also in Richtung des zweiten Gehäuses 20, gedrückt. Auf diese Weise wird das Ende 36 des ersten Gehäuses 18 um den Rollierring 26 des zweiten Gehäuses 20 gebogen. Darüber hinaus wird, wie im ersten Ausführungsbeispiel auch, das erste Gehäuse durch die Rollierscheibe 32 konkav in Richtung der Rolliernut 28 bzw. dem Dichtmittel 30 gedrückt. Auf diese Weise ist außen am ersten Gehäuse 18 nach dem Rollieren, eine umlaufende, konkave Rille zu sehen. Darüber hinaus ist zu sehen, dass sich das Ende 36 des ersten Gehäuses 18 um den Rollierring 26 des zweiten Gehäuses 20 schmiegt, so dass eine Verhakung des ersten Gehäuses 18 am zweiten Gehäuse 20 entsteht und eine Art Bördelbereich 38 gebildet ist.

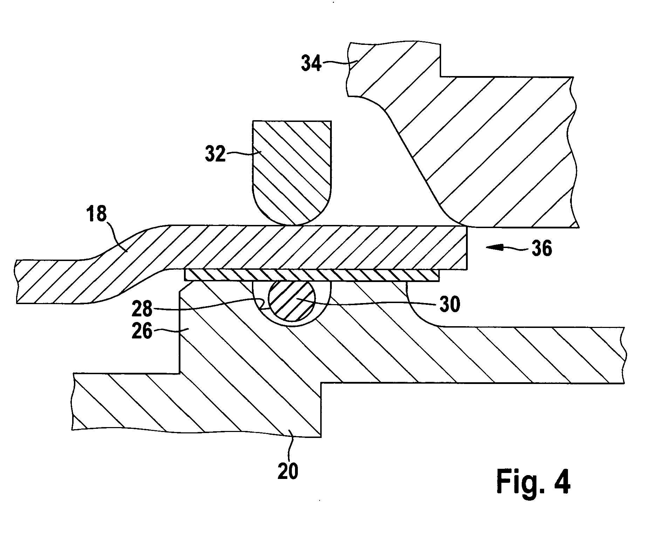

In Figur 4 ist grundsätzlich die gleiche Ausführungsform wie in den Figuren 2 und 3 zu sehen. Im Gegensatz zu den vorangegangenen Beispielen ist das Dichtmittel 30 nach der Erfindung aus einer Kombination gebildet. Einerseits ist eine NBR-Folie auf dem Rollierring 26 im Bereich des ersten Gehäuses 18 angeordnet, jedoch ist darüber hinaus in der Rolliernut 28 ein im Querschnitt kreisförmiges Dichtmittel, beispielsweise ein Ring aus PTFE oder NBR eingesetzt. Wie im Ausführungsbeispiel aus Figur 2 erstreckt sich die Folie über den Rand des Rollierrings 26 hinaus. Auf diese Weise ist auch der am Ende 36 entstandene Bördelbereich 38 abgedichtet.

Selbstverständlich kann beim Rollieren auch das erste Gehäuse 18 und das zweite Gehäuse 20 stillstehen und sich die Rollierscheibe 32 und/oder die Crimpscheibe 34 um die Gehäuse 18, 20 herumbewegen.

Bei den Ausführungsbeispielen aus Figur 2 und Figur 4, bei denen das Dichtmittel 30 zumindest teilweise als Folie ausgebildet ist, ergeben sich zwei Dichtbereiche, und zwar einer im Bördelbereich 38 und ein zweiter im Bereich der Rolliernut 28.

In einer Variation der Erfindung ist das Dichtmittel 30 als ringförmiges, insbesondere elastisches Flachband ausgebildet, das vor dem Aufsetzen des ersten Gehäuses 18 auf den Rollierring 26 des zweiten Gehäuses 20 aufgezogen wird. In einer weiteren Variation, die auch mit den anderen Variationen der Erfindung kombiniert werden kann, ist das Dichtmittel als elastischer Ring ausgebildet, der in die Rolliernut 28 eingesetzt wird, bevor das erste Gehäuse 18 aufgesetzt und aufrolliert wird.

In einer weiteren Variation der Erfindung kann das Dichtmittel 30 auch leicht viskos und kompressibel sein und in die Rolliernut 28 des zweiten Gehäuses 20 eingebracht werden. Beispielsweise können hier viskose Dichtmassen in die Rolliernut 28 eingespritzt werden.

## Patentansprüche

1. Scheibenwischvorrichtung (10), insbesondere für ein Kraftfahrzeug, mit einem Antriebsmittel (12), das ein erstes Gehäuse (18) aufweist und einem Getriebe (22), das ein zweites Gehäuse (20) aufweist, wobei das erste Gehäuse (18) mit dem zweiten Gehäuse (20) in einem Rollierbereich (24) durch Aufrollieren befestigt ist, **dadurch gekennzeichnet, dass** zwischen erstem Gehäuse (18) und zweiten Gehäuse (20) im Rollierbereich (24) ein Dichtmittel (30) vorgesehen ist, wobei das Dichtmittel (30) eine Kombination aus einem im Querschnitt kreisförmigen Ring aus PTFE oder NBR, und einer ringförmigen Folie aus NBR ist.

2. Scheibenwischvorrichtung (10), nach einem der vorhergehenden Ansprüche, **dadurch gekennzeichnet, dass** das zweite Gehäuse (20) eine Rolliernut (28) im Rollierbereich (24) aufweist und das erste Gehäuse (18) im Wesentlichen aus Blech ausgebildet ist.

3. Scheibenwischvorrichtung (10), nach einem der vorhergehenden Ansprüche, **dadurch gekennzeichnet, dass** das Dichtmittel (30) als insbesondere ringförmiges Flachband ausgebildet ist.

4. Scheibenwischvorrichtung (10), nach einem der vorhergehenden Ansprüche, **dadurch gekennzeichnet, dass** das Dichtmittel (30) in einer Rolliernut (28) des zweiten Gehäuses (20) angeordnet ist.

5. Scheibenwischvorrichtung (10), nach einem der vorhergehenden Ansprüche, **dadurch gekennzeichnet, dass** das Dichtmittel (30) leicht viskos und kompressibel ist und in eine Rolliernut (28) des zweiten Gehäuses (20) eingebracht ist.

## Claims

1. Windscreen wiper device (10), particularly for a motor vehicle, with a driving means (12) which has a first housing (18), and with a gearing (22) which has a second housing (20), wherein the first housing (18) is fastened to the second housing (20) in a rolling region (24) by being rolled on, **characterized in that** a sealing means (30) is provided in the rolling region (24) between the first housing (18) and second housing (20), wherein the sealing means (30) is a combination of a cross-sectionally circular ring made of PTFE or NBR, and an annular film made of NBR.

2. Windscreen wiper device (10) according to Claim 1, **characterized in that** the second housing (20) has a rolling groove (28) in the rolling region (24), and the first housing (18) is substantially formed from sheet metal.

3. Windscreen wiper device (10) according to either of the preceding claims, **characterized in that** the sealing means (30) is designed as an in particular annular flat strip.

4. Windscreen wiper device (10) according to one of the preceding claims, **characterized in that** the sealing means (30) is arranged in a rolling groove (28) of the second housing (20).

5. Windscreen wiper device (10) according to one of the preceding claims, **characterized in that** the sealing means (30) is slightly viscous and compressible and is introduced into a rolling groove (28) of the second housing (20).

## Revendications

1. Dispositif d'essuie-glace (10), notamment pour un véhicule automobile, comprenant un moyen d'entraînement (12), qui présente un premier boîtier (18) et un engrenage (22) qui présente un deuxième boîtier (20), le premier boîtier (18) étant fixé par écrouissage au deuxième boîtier (20) dans une région d'écrouissage (24), **caractérisé en ce qu'**entre le premier boîtier (18) et le deuxième boîtier (20), dans la région d'écrouissage (24), est prévu un moyen d'étanchéité (30), le moyen d'étanchéité (30) étant une combinaison d'une bague de section transversale annulaire en PTFE ou en NBR, et d'une feuille annulaire en NBR.

2. Dispositif d'essuie-glace (10) selon la revendication 1, **caractérisé en ce que** le deuxième boîtier (20) présente une rainure d'écrouissage (28) dans la région d'écrouissage (24) et le premier boîtier (18) est réalisé essentiellement en tôle.

3. Dispositif d'essuie-glace (10) selon l'une quelconque des revendications précédentes, **caractérisé en ce que** le moyen d'étanchéité (30) est réalisé sous forme de bande plate, notamment annulaire.

4. Dispositif d'essuie-glace (10) selon l'une quelconque des revendications précédentes, **caractérisé en ce que** le moyen d'étanchéité (30) est disposé dans une rainure d'écrouissage (28) du deuxième boîtier (20).

5. Dispositif d'essuie-glace (10) selon l'une quelconque des revendications précédentes, **caractérisé en ce que** le moyen d'étanchéité (30) est légèrement visqueux et compressible et est introduit dans une rainure d'écrouissage (28) du deuxième boîtier (20).
